# FASCICULE DE BREVET EUROPEEN

(11) **EP 3 136 571 B1**
(45) Date de publication et mention de la délivrance du brevet: **28.04.2021**
(21) Numéro de dépôt: 16183244.9
(22) Date de dépôt: 08.08.2016
(51) Int. Cl.: H02K 29/08, H02K 11/215

(54) **DISPOSITIF DE DETECTION DE POSITION DESTINE A ETRE MONTE DANS UN BOITIER QUI COMPREND UNE MACHINE ELECTRIQUE ET UN DISPOSITIF ELECTRONIQUE DE COMMANDE DE LA MACHINE ELECTRIQUE**
POSITIONSERKENNUNGSVORRICHTUNG ZUM EINBAU IN EIN GEHÄUSE, DAS EINE ELEKTRISCHE MASCHINE UND EINE ELEKTRONISCHE STEUERVORRICHTUNG DIESER ELEKTRISCHEN MASCHINE ENTHÄLT
POSITION DETECTION DEVICE INTENDED FOR BEING MOUNTED IN A HOUSING WHICH INCLUDES AN ELECTRIC MOTOR AND AN ELECTRONIC DEVICE FOR CONTROLLING THE ELECTRIC MACHINE

(30) Priorité: 24.08.2015 FR 1557890
(43) Date de publication de la demande: 01.03.2017
(73) Titulaire: Valeo Systèmes de Contrôle Moteur, 95800 Cergy Saint Christophe (FR)
(72) Inventeur: BAUDESSON, Philippe, 27220 La Boissière (FR); GUIBET, GUIBET, 14400 VAUCELLES (FR); GUERIN, Fabien, 92320 CHATILLON (FR); ROUET, Amaury, 75015 Paris (FR); BENCHEIKH, Amine, 93800 Epinay sur Seine (FR)
(74) Mandataire: Novembre, Christophe Adelphe

(56) Documents cités:
- WO-A1-99/01665
- CN-A- 103 855 847
- CN-Y- 2 766 441

## Description

La présente invention concerne un ensemble comprenant un dispositif de connexion entre une machine électrique et un dispositif électronique de commande de la machine, et un organe d'étanchéité, pour des applications dans le domaine de l'automobile.

L'invention concerne également un compresseur de suralimentation électrique comprenant une machine électrique et son dispositif électronique de commande reliés électriquement par un ensemble selon l'invention.

Dans le cas d'un moteur diesel, le temps de latence d'un compresseur de suralimentation à gaz est responsable de l'émission de particules quand, dans une phase d'accélération à bas régime, le système d'injection essaie de fournir la puissance demandée en injectant un surplus de carburant.

Des considérations écologiques, et notamment la lutte contre le réchauffement climatique en réduisant les émissions de CO2, ont amené les équipementiers à proposer aux constructeurs d'automobiles des compresseurs de suralimentation électriques qui améliorent la réponse dynamique des moteurs à combustion interne de faible cylindrée à bas régime.

En particulier, la société VALEO SYSTEMES DE CONTRÔLE MOTEUR propose dans sa demande de brevet internationale WO 2013/045821 la mise en œuvre d'un compresseur de suralimentation électrique pour assister le turbocompresseur à gaz au moment de l'enfoncement de la pédale d'accélérateur.

A la différence des compresseurs de suralimentation classiques entraînés par les gaz d'échappement, le compresseur de suralimentation électrique, c'est-à-dire entraîné par un moteur électrique, présente un temps de réponse instantané, et améliore le couple moteur à bas régime et l'accélération. Ce système permet de réduire considérablement la cylindrée des moteurs thermiques, et par conséquent de réduire la consommation de carburant.

Toutefois, dans certains modes de réalisation d'un tel système, il peut être difficile de connecter les entrées de phases du moteur électrique à un dispositif électronique de commande du moteur. Ceci est dû au fait que les entrées de phase du moteur sont le plus souvent proches de l'axe de rotation du moteur, et aussi au fait qu'il existe des contraintes d'étanchéité entre la partie turbine et la partie électrique, comme l'indique la demande de brevet internationale WO2005/024202. En outre, afin de contrôler le moteur, on utilise typiquement un capteur de position pour détecter la position du moteur. Il est préférable que ce capteur soit au plus proche du moteur ce qui est difficile à combiner avec les contraintes mentionnées précédemment Le document CN103855847 divulgue un dispositif de détection de position connexe.

L'invention vise à améliorer l'intégration du capteur de position dans un équipement électrique comprenant une machine électrique ayant un dispositif électronique de commande intégré, notamment dans un compresseur de suralimentation électrique où des contraintes d'étanchéités doivent être respectées.

A cet effet, l'invention concerne un dispositif de détection de position comme décrit dans la revendication 1.

Selon un mode de réalisation, le dispositif comporte au moins un élément de connexion électrique destiné à connecter électriquement le capteur de position avec le dispositif électronique de commande.

Selon un mode de réalisation, l'élément de connexion électrique est solidaire dudit support.

Selon un mode de réalisation, l'élément de connexion électrique est une languette.

Selon un mode de réalisation, la languette est sensiblement rectiligne le long de la deuxième portion et comprend un décrochement sensiblement au niveau de la deuxième extrémité.

Selon un mode de réalisation, ledit élément de connexion électrique s'étend depuis ladite première portion qui reçoit le capteur de position jusqu'à la deuxième extrémité du support.

Selon un mode de réalisation, l'élément de connexion électrique comprend une extrémité située au niveau de la deuxième extrémité du support qui est destinée à être rapportée contre une borne électrique du dispositif électronique de commande.

Selon un mode de réalisation, le support comprend au moins une excroissance s'étendant depuis la deuxième portion et destinée à venir en appui sur un palier formé par une paroi latérale du trou.

Selon un mode de réalisation, la deuxième portion du support comprend au moins une tige s'étendant entre la première extrémité et la deuxième extrémité du support.

Selon un mode de réalisation, le support comprend au moins une troisième portion s'étendant transversalement depuis ladite tige et venant en prise avec l'élément de connexion électrique.

Selon un mode de réalisation, le support comprend deux tiges s'étendant depuis la première portion et reliées entre elles par la au moins une troisième portion.

L'invention concerne en outre un équipement électrique comprenant :
- une machine électrique,
- un dispositif électronique de commande destiné à commander la machine électrique,
- un boitier logeant la machine électrique dans un premier logement, et le dispositif électronique de commande dans un deuxième logement, les deux logements étant étanches l'un par rapport à l'autre,
- un dispositif de détection selon l'invention, destiné à mesurer une position de la machine électrique et logé dans un organe d'étanchéité contribuant à l'étanchéité entre le premier logement et le deuxième logement.

Selon un mode de réalisation, ledit organe d'étanchéité comprend un logement comportant ledit dispositif de détection, ledit logement étant configuré de sorte que le capteur de position du dispositif de détection est positionné vis-à-vis d'un arbre de rotation de la machine électrique de manière à détecter un signal émis par un élément correspondant porté par l'arbre de rotation.

Selon un mode de réalisation, le dispositif de détection est maintenu en place par son support étant reçu contre les parois du logement et par une mise en appui du dispositif électronique de commande sur le support du dispositif de détection.

Notamment, une borne de la machine électrique désigne une phase de la machine électrique.

L'invention va être décrite en détail dans la description qui suit en liaison avec les dessins ci-annexés. Il est à noter que ces dessins n'ont d'autre but que d'illustrer le texte de la description et ne constituent en aucune sorte une limitation de la portée de l'invention.
La figure 1 est une vue de dessus d'une partie électrique d'un compresseur de suralimentation électrique connu de l'état de la technique montrant une carte électronique de puissance.
Les figures 2 et 3 sont des vues en perspective d'un dispositif de connexion muni d'un organe d'étanchéité formant un ensemble.
La figure 4 est une vue éclatée de l'ensemble des figures 2 et 3.
La figure 5 représente le dispositif de connexion des figures 2 à 4.
La figure 6 est une demi-coupe radiale de l'ensemble monté dans un boiter, la machine électrique n'étant pas représentée.
La figure 7 est une autre vue de coupe radiale dans laquelle la machine électrique est représentée.
La figure 8 est une vue de dessus d'un équipement électrique comprenant une machine électrique, l'ensemble, et un dispositif électronique de commande de la machine électrique.
La figure 9 est une vue éclatée de l'équipement électrique, la machine électrique et le dispositif électronique de commande n'étant pas représentés.
La figure 10 est une vue éclatée d'un compresseur de suralimentation électrique comprenant l'équipement électrique.
Les figures 11 à 15 illustrent un dispositif comprenant un capteur de position utilisable dans l'équipement électrique, en particulier dans l'ensemble.

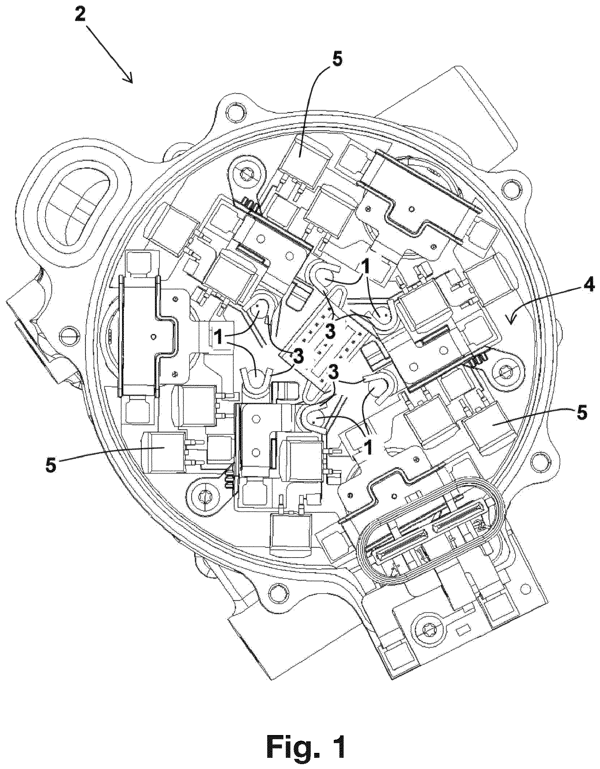

La figure 1 illustre une liaison électrique entre des bornes 1, notamment des entrées de phase, d'une machine électrique tournante et des pièces de connexion 3 d'un dispositif électronique de commande 4 de la machine dans un compresseur de suralimentation électrique 2. Le dispositif électronique de commande comprend par exemple une carte électronique de puissance 4.

Le stator de la machine fait un premier diamètre de sensiblement 40 mm et la carte électronique de puissance 4 fait un second diamètre de sensiblement 110 mm. Les bornes 1 de la machine sont disposées sur un palier du boitier du compresseur à des intervalles angulaires prédéterminés autour de l'axe de rotation de la machine, à une première distance prédéterminée de l'axe de rotation, égale au plus à 20 mm. Ces bornes 1 de la machine sortent alors au milieu de la carte électronique de puissance 4 pour être connectées aux pièces de connexion 3 de la carte électronique 4. La présence de ces pièces de connexion 3 au milieu de la carte de puissance 4 limite les possibilités de placement et de routage des composants électroniques 5 de la carte 4.

En outre, les composants électroniques 5 ne sont pas protégés vis-à-vis de la partie machine du compresseur de suralimentation 2, car il n'y a pas d'étanchéité entre la partie machine et la partie contenant le dispositif électronique de commande. Des particules métalliques issues de la partie machine peuvent venir dans le dispositif électronique de commande 4 pour y provoquer des court-circuits parasites.

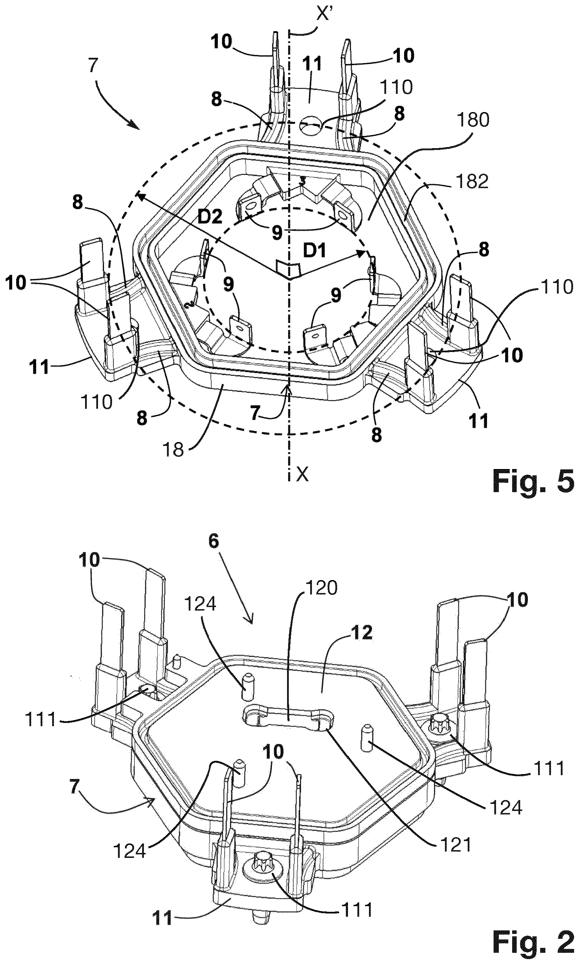

Les figures 2, 3, 4 illustrent un exemple d'un ensemble 6 selon l'invention destiné à assurer une connexion électrique étanche entre la machine électrique et son dispositif électronique de commande.

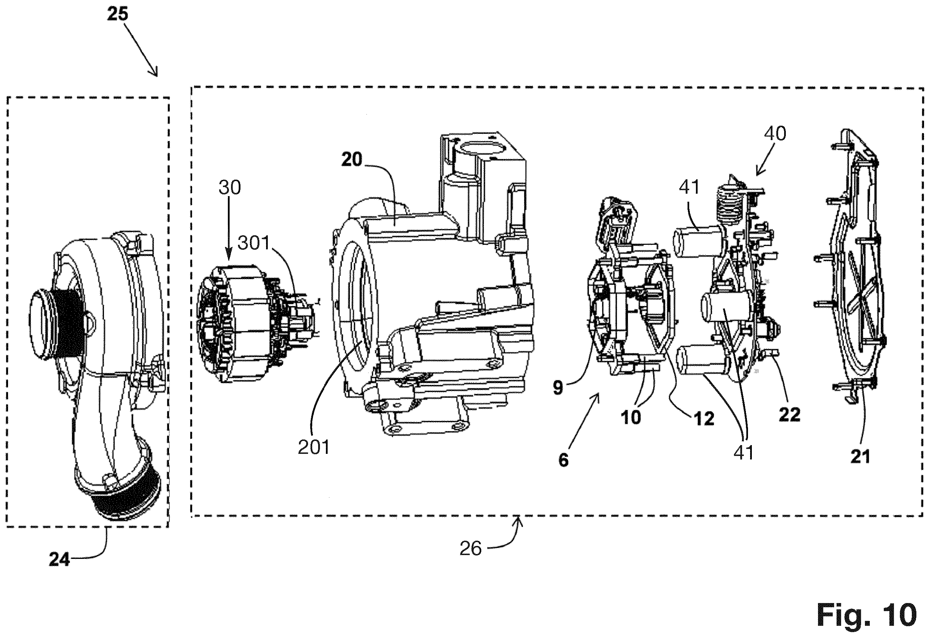

L'ensemble 6 comprend un dispositif de connexion 7 qui est destiné à connecter électriquement la machine électrique 30 et le dispositif électronique de commande 40 de la machine, qui sont par exemple logés de manière étanche dans un boîtier 20 tel qu'illustré en figure 10.

Un organe d'étanchéité 12 est rapporté de manière étanche sur le dispositif de connexion 7. Par exemple, une couronne 17, formant joint d'étanchéité, coopère avec une gorge circonférentielle sur un côté 182 du dispositif de connexion 7 et l'organe d'étanchéité 12, en particulier un bord de l'organe d'étanchéité 12, pour assurer un contact étanche entre l'organe d'étanchéité 12 et le dispositif de connexion 7. Cependant, le contact étanche entre l'organe d'étanchéité 12 et le dispositif de connexion 7 pourrait se faire sans la couronne 17, par exemple en prévoyant des joints d'étanchéité intégraux avec l'organe d'étanchéité 12 et /ou le dispositif de connexion 7.

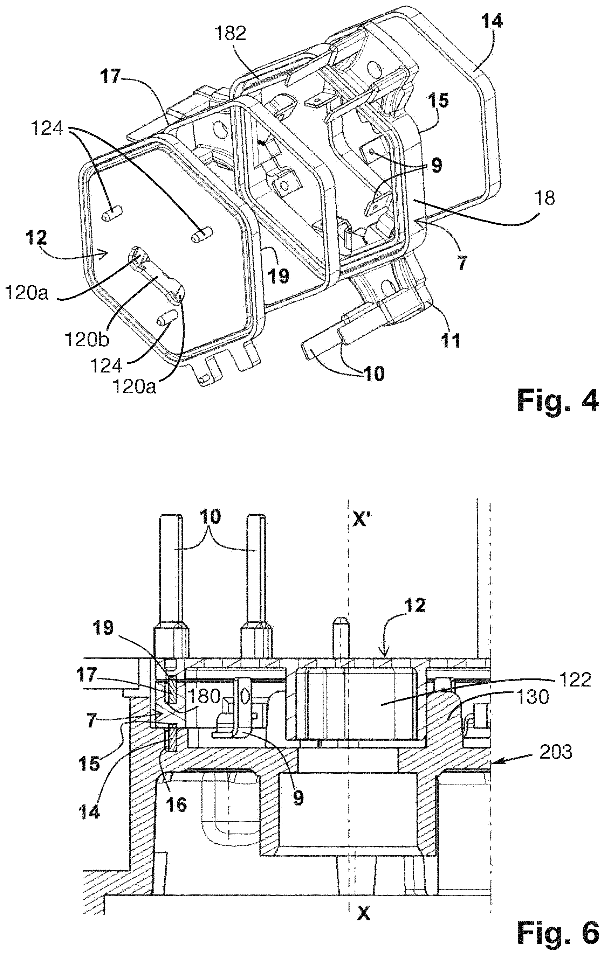

L'organe d'étanchéité 12 comprend un logement 120 comportant un capteur de position. Pour des raisons de clarté, le capteur de position n'est pas représenté sur les figures 2 à 4. Le capteur de position est destiné à mesurer une position de la machine électrique 30. Lorsque le premier organe d'étanchéité 12 est rapporté sur le dispositif de connexion 7, le logement 120 s'étend principalement suivant une direction longitudinale XX' du dispositif de connexion 7 comme illustré sur la figure 5 qui sera décrite plus loin.

En intégrant le capteur de position de la machine électrique dans l'organe d'étanchéité 12, on améliore la compacité de l'ensemble comprenant la machine électrique 30 et le dispositif électronique de commande 40 de la machine.

Le dispositif de connexion 7 comprend notamment une partie 9 qui va être connectée électriquement avec la machine électrique 30, et une partie 10 qui va être connectée électriquement avec le dispositif électronique de commande 40.

En particulier, l'organe d'étanchéité 12 vient de manière étanche entre la partie 9 du dispositif de connexion qui est destinée à être connectée électriquement avec la machine électrique, et la partie 10 du dispositif de connexion qui est destinée à être connectée électriquement avec le dispositif électronique de commande 4. Notamment, l'organe d'étanchéité forme un capot 120 qui recouvre de manière étanche la partie 9 destinée à être connectée à la machine 30. Ainsi, lorsque le dispositif de connexion 7 est monté sur le logement de la machine, l'organe d'étanchéité contribue à la séparation étanche entre la partie 201 du boîtier 20 comprenant la machine 30 et la partie 202 du boîtier 20 comprenant le dispositif électronique de commande 40. L'organe d'étanchéité 12 pourrait être réalisé par exemple avec de la résine. Une étanchéité supplémentaire devrait alors être prévue pour empêcher la résine de s'écouler dans la machine 30.

En particulier, lorsque l'organe d'étanchéité 12 est monté sur le dispositif de connexion 7, le logement 120 du capteur s'étend du côté de la partie 9 du dispositif de connexion 7 qui est destinée à être connectée électriquement avec la machine électrique 30. Ainsi, le capteur de position peut être positionné à proximité de l'arbre de rotation de la machine 30 qui se trouve dans la même zone que les bornes de la machine.

Le dispositif de connexion 7 est illustré en figure 5. La partie 9 qui est destinée à être connectée électriquement avec la machine électrique 30 est notamment située dans une partie centrale du dispositif de connexion 7. La partie 10 du dispositif de connexion 7 qui est destinée à être connectée électriquement avec le dispositif électronique de commande 40 de la machine est notamment située en périphérie du dispositif de connexion 7, radialement par rapport à la partie 9 qui est destinée à être connectée électriquement avec la machine électrique 30.

En particulier, la partie qui est destinée à être connectée électriquement avec la machine électrique 30 comprend une pluralité de premières bornes électriques 9 destinées à être rapportées sur des bornes respectives de la machine électrique 30, notamment des entrées de phases de la machine électrique 30 ; et la partie du dispositif de connexion 7 qui est destinée à être connectée électriquement avec le dispositif électronique de commande 40 de la machine comprend une pluralité de secondes bornes électriques 10 destinées à être rapportées sur des bornes électriques correspondantes du dispositif électronique de commande 40, notamment d'une carte électronique de puissance. Les premières bornes électriques 9 et les secondes bornes électriques 10 sont reliées par des barres conductrices électriquement 8 qui sont revêtues d'une matière électriquement isolante. La matière électriquement isolante peut-être déposée par surmoulage sur les barres conductrices. La matière électriquement isolante est par exemple du plastique. Les premières 8 et secondes 9 bornes électriques sont notamment destinées à être connectées par une opération de solidarisation mécanique avec les bornes correspondantes de la machine 30 ou du dispositif électronique de commande 40, telle que par brasage, soudage, vissage ou autre. En particulier, la matière électriquement isolante maintient ensemble les barres conductrices électriquement 8, par exemple par l'intermédiaire d'un cylindre 18 décrit plus loin.

Par exemple, les premières bornes 9 sont agencées sensiblement à une première distance D1 par rapport à la direction longitudinale XX' du dispositif de connexion 7; et les secondes bornes 10 sont agencées autour de la direction longitudinale XX' à une seconde distance prédéterminée D2, supérieure à la première distance prédéterminée D1. A cet effet, les barres conductrices électriquement 8 s'étendent sensiblement radialement à partir des premières bornes 9. Ainsi, vu suivant la direction longitudinale XX', les barres 8 forment sensiblement une étoile dont les branches sont radiales. La seconde distance prédéterminée D2 permet de positionner les secondes bornes 10 en périphérie du dispositif électronique de commande 40. Ainsi, la connexion électrique au niveau du dispositif électronique de commande est réalisée à la périphérie du dispositif électronique de commande, contrairement à l'art antérieur, ce qui libère de la place pour le positionnement de composants électroniques. Dans cet exemple particulier, la seconde distance D2 peut être limitée à 55 mm pour correspondre au diamètre du dispositif électronique de commande.

Notamment, les premières bornes 9 et secondes bornes 10, s'étendent parallèlement à la direction longitudinale XX' du dispositif de connexion 7 de manière à venir face aux bornes correspondantes de la machine électrique ou du dispositif électronique de commande. En particulier, les premières bornes 9 s'étendent en outre le long d'un cercle, ayant pour diamètre la première distance prédéterminée D1, centré sur la direction longitudinale XX' du dispositif de connexion 7 ; et les deuxièmes bornes 10 sont dans des plans radiaux comprenant la direction longitudinale XX' du dispositif de connexion 7.

Notamment, les bornes 8, 9 et leurs barres de connexion 8 respectives sont groupées sur des positions angulaires par rapport à la direction longitudinale XX' du dispositif de connexion 7. Ceci est particulièrement avantageux lorsque le dispositif électronique de commande 4 comprend des modules de puissances régulièrement répartis sur des positions angulaires, chacun des modules ayant deux bornes électriques qui vont être connectées à deux deuxièmes bornes 10 du dispositif de connexion 7.

En particulier, la matière électriquement isolante du dispositif de connexion 7 forme un cylindre creux 18 s'étendant suivant la direction longitudinale XX' du dispositif de connexion 7. Les premières bornes électriques 9 s'étendent dans le logement interne 180 du cylindre 18 depuis la paroi interne latérale du cylindre. Le logement interne 180 peut être centré sur la direction longitudinale XX' du dispositif de connexion7 et/ou s'étendre sur toute la hauteur du cylindre 18. Les secondes bornes électriques 10 s'étendent depuis la paroi externe latérale du cylindre 18.

Notamment, la matière électriquement isolante comprend des portions 11 destinées à assurer un plaquage du dispositif de connexion 7 sur le logement de la machine électrique, par exemple avec des organes de fixation, tels qu'entre autres des vis 111 positionnées dans des trous 110, ou des clips. Les portions de plaquage 11 s'étendent en particulier depuis la paroi externe latérale du cylindre 18 et peuvent en outre relier au moins une partie des barres de conduction 8 entre elles pour améliorer le maintien des barres 8, comme par exemple en figure 5. En figure 5, les portions de plaquage 11 relient deux barres conductrices 8 d'un même groupe.

En particulier, le dispositif de connexion 7 contribue à l'étanchéité entre la machine électrique 30 et le dispositif électronique de commande 40 en réalisant en outre un contact étanche entre le dispositif de connexion et le logement de la machine. A cet effet, un côté du dispositif de connexion 7 comprend une portion 181 destinée à être rapportée de manière étanche sur le logement de la machine électrique.

Lorsque le dispositif de connexion 7 est vu suivant sa direction longitudinale XX', la portion 181 est par exemple située entre la partie 9 du dispositif de connexion qui est destinée à être connectée électriquement avec la machine électrique 30, et la partie 10 du dispositif de connexion qui est destinée à être connectée électriquement avec le dispositif électronique de commande 40.

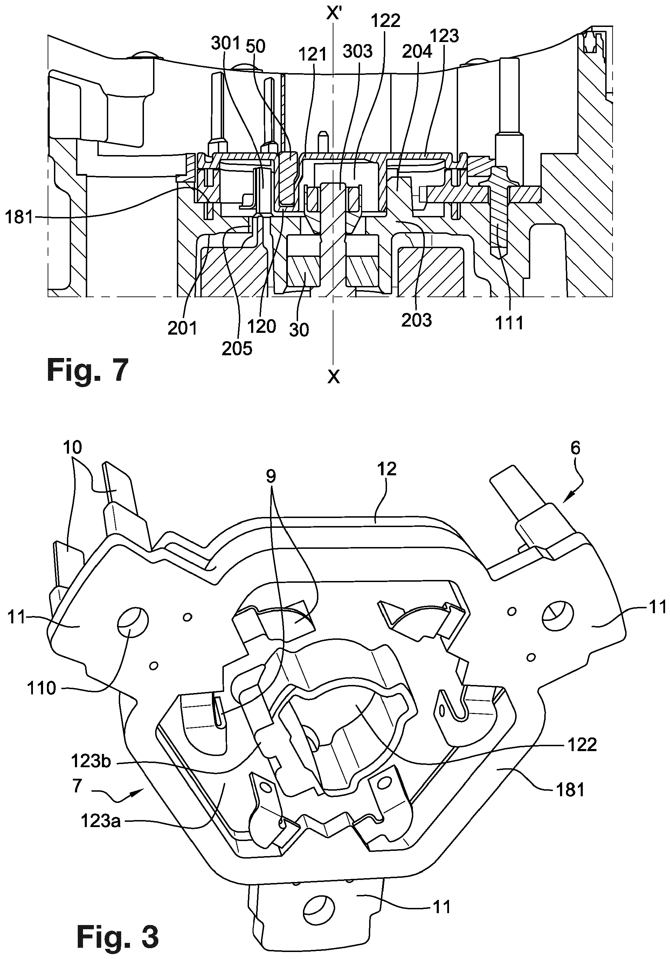

Dans l'exemple illustré en figures 2 à 5, une première extrémité 181 du cylindre 18 réalise la portion destinée à être rapportée de manière étanche sur le logement de la machine électrique. Comme illustré en figures 6 et 7, lorsque le dispositif de connexion 7 est monté sur une paroi 203 depuis laquelle s'étendent les bornes 301 de la machine 30, la première extrémité 181 du cylindre 18 vient en contact étanche avec la paroi 203, et le logement interne 180 du cylindre 18 reçoit les bornes 301 de la machine 30, notamment par une ouverture délimitée par la première extrémité 181. Les premières bornes 9 du dispositif de connexion 7 peuvent alors être connectées aux bornes 301 de la machine 30.

Par exemple, l'étanchéité entre le logement de la machine 30 et la première extrémité 181 est obtenue par une couronne 14, formant joint d'étanchéité, qui coopère avec la première extrémité 181 du cylindre 18 et une gorge circonférentielle située dans la paroi 203 du logement de la machine 30. Cependant, le contact étanche entre la première extrémité 181 et le logement de la machine pourrait se faire sans la couronne 14, par exemple en prévoyant des joints d'étanchéité intégraux avec la première extrémité 181 et/ou le logement de la machine 30.

En particulier, l'organe d'étanchéité 12 est rapporté sur un côté opposé au côté du dispositif de connexion 7 comprenant la portion 181 destinée à être rapportée de manière étanche sur le logement de la machine électrique 30. Dans l'exemple illustré, une seconde extrémité 182 du cylindre 18 opposée à la première extrémité 181 reçoit l'organe d'étanchéité 12 en contact étanche. L'organe d'étanchéité 12 ferme de manière étanche une ouverture délimitée par la seconde extrémité 182 du cylindre creux 18. Par exemple, une couronne 17, formant joint d'étanchéité, coopère avec une gorge circonférentielle située dans la seconde extrémité 182 et l'organe d'étanchéité 12, en particulier avec un bord de l'organe d'étanchéité 12, pour assurer un contact étanche entre l'organe d'étanchéité 12 et le dispositif de connexion 7. Cependant, le contact étanche entre l'organe d'étanchéité 12 et la seconde extrémité 182 pourrait se faire sans la couronne 17, par exemple en prévoyant des joints d'étanchéité intégraux avec l'organe d'étanchéité 12 et/ou la seconde extrémité 182.

Notamment, le logement du capteur de position est constitué d'une poche 120 définie dans l'organe d'étanchéité 12. Le capteur de position est reçu dans la poche 120 par une ouverture 121 de la poche 120. L'ouverture 121 est sur une face de l'organe d'étanchéité 120 qui est opposée à la partie 9 du dispositif qui est destinée à être connectée électriquement avec la machine électrique 30. En particulier, l'ouverture 121 est la seule ouverture de la poche 120.

En particulier, l'organe d'étanchéité 12 comprend une zone libre de matière 122 destinée à recevoir l'arbre de rotation 303 de la machine 30. Notamment, la zone libre de matière 122 reçoit une extrémité de l'arbre de rotation 303 de la machine comme illustré en figure 7. Le capteur de position 50 est situé en périphérie de la zone libre de matière 122, en particulier dans sa périphérie immédiate. Prévoir une zone 122 de réception de l'arbre de rotation 303 dans l'organe d'étanchéité 12 permet d'améliorer encore l'intégration dans l'équipement électrique qui comprend la machine électronique 30 et son dispositif électronique de commande dans un même boitier 20. Le capteur de position 50 est au plus proche de l'arbre de rotation 303 de la machine électrique 30 pour détecter le signal émis par un élément positionné sur l'arbre de rotation 303.

En particulier, l'organe d'étanchéité 12 comprend une face 123 qui a une partie sensiblement plane 123a et une excroissance 123 b qui s'étend depuis la face 123. Cette excroissance 123a comporte le logement 120 qui reçoit le capteur de position 50. L'espace compris entre la partie sensiblement plane 123a et l'excroissance 123b permet de recevoir la connexion électrique entre le dispositif de connexion 7 et la machine électrique 30. Notamment, les premières bornes 9 du dispositif de connexion 7 sont dans cet espace lorsque l'organe d'étanchéité 12 est monté sur le dispositif de connexion 7 ; et les bornes 301 de la machine électrique 30 y sont reçues lorsque l'ensemble 6 est monté sur le logement de la machine 30.

En particulier, l'excroissance 123b délimite la zone libre 122 de l'organe d'étanchéité 12, par exemple en formant une chemise comme illustré en figure 3, ce qui améliore encore l'intégration dans l'équipement électrique qui comprend la machine électronique 30 et son dispositif électronique de commande 40 dans un même boitier 20. En outre, la forme de chemise améliore la tenue mécanique de l'excroissance 123b.

En particulier, l'excroissance 123b qui comporte le logement 120 forme un élément de positionnement qui assure un positionnement de l'ensemble 6 par rapport au logement de la machine lors du montage de l'ensemble 6 sur le logement de la machine. A cet effet, l'excroissance 123b vient en correspondance avec une paroi 204 qui s'étend depuis la paroi 203 du logement de la machine 30. Cependant, l'organe d'étanchéité 12 pourrait comprendre un autre élément de positionnement issu de l'organe d'étanchéité 12.

L'ensemble 6 est particulièrement avantageux pour connecter électriquement une machine électrique 30 et son dispositif électronique de commande 40 en respectant l'étanchéité entre ceux-ci. L'ensemble 6 permet en particulier d'assurer le positionnement et l'étanchéité du capteur de position 50 de la machine. L'ensemble 6 permet en outre de libérer l'espace de routage dans le dispositif électronique de commande 40 en ramenant à la périphérie les bornes du dispositif électronique de commande 40 qui doivent être connectées la machine 30.

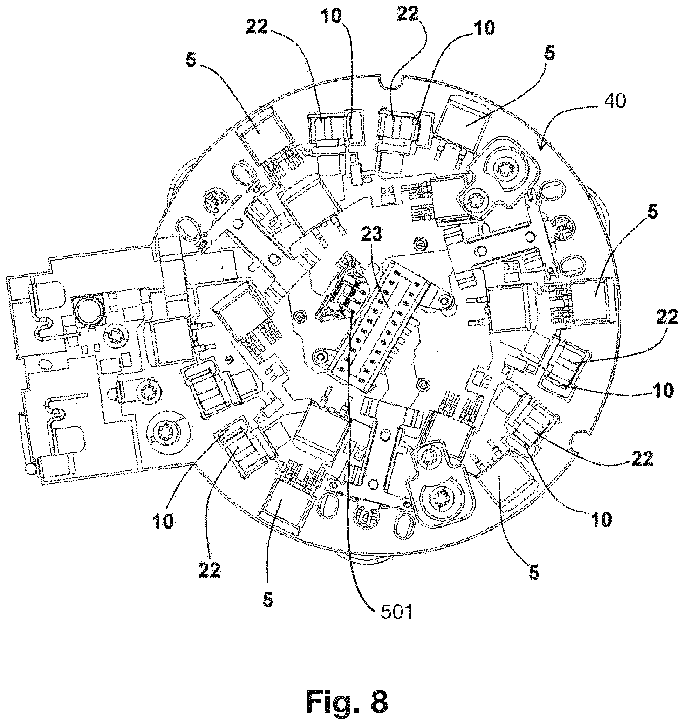

L'ensemble 6 permet aussi de garantir un processus d'assemblage propre. Dans l'art antérieur, les bornes 1 issues de la machine sont entourées de composants électroniques 5. Ces composants 5 risquent d'être abimés par l'opération de soudage des bornes 1 de la machine avec les bornes 3 du dispositif électronique de commande. La figure 8 montre un dispositif électronique de commande 40 d'un équipement électrique selon l'invention lorsqu'il est monté dans le boitier 20 comme il sera décrit plus loin. Avec l'ensemble 6 selon l'invention, les bornes 22 du dispositif électronique de commande 40 sont entourés de moins de composants électroniques 5 ce qui diminue les risques de dommage de ces composants 5.

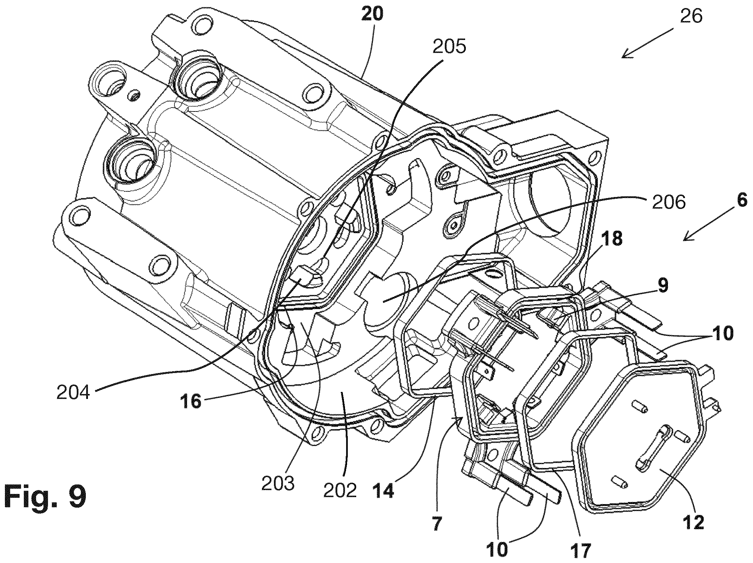

Le montage de l'ensemble 6 avec la machine électrique 30 et le dispositif électronique de commande 40 va être plus précisément décrit en faisant référence aux figures 9 et 10.

La machine électrique 30 et le dispositif électronique de commande 40 sont logés dans un même boitier 20. Le boitier 20 comprend un premier logement 201 recevant la machine électrique 30 et un deuxième logement 202 recevant le dispositif électronique de commande 40 de la machine. Une paroi 203 sépare le premier logement 201 du deuxième logement 202. En particulier, la paroi 203 est une paroi périphérique du premier logement 201 et est sensiblement perpendiculaire à l'axe de l'arbre de rotation 303 de la machine électrique 30.

Le montage de l'ensemble 6 comprend donc successivement:
- le montage de la machine électrique 30 dans le premier logement 201, les bornes 301 de la machine 30 passant par des ouvertures 205 de la paroi de séparation 203 ;
- dans un premier temps, la pose du dispositif de connexion 7 sur la paroi de séparation 203 du boitier 20 avec un contact étanche entre le dispositif de connexion 7 et la paroi 203 comme décrit précédemment, et une accessibilité des bornes 301 de la machine 30 pour une première soudure avec les bornes 9 du dispositif de connexion 7;
- dans un deuxième temps, l'obstruction par l'organe d'étanchéité 12 de la partie accessible pour la première soudure afin d'assurer un deuxième niveau d'étanchéité, notamment en recouvrant de manière étanche le logement interne 180 du dispositif de connexion 7 comme décrit précédemment;
- le positionnement du dispositif électronique de commande 40 dans le deuxième logement 202 ; le dispositif électronique de commande 40 est notamment introduit dans le deuxième logement 202 par une ouverture qui est opposée à l'ouverture par laquelle la machine électrique 30 est introduite dans le boitier 20 ;
- une deuxième soudure, consistant en la soudure déportée dans une zone pouvant être gardée propre, des secondes bornes 10 du dispositif de connexion 7 avec les bornes 22 du dispositif électronique de commande 40 ;
- le deuxième logement 202 peut être ensuite fermé par un couvercle 21.

L'organe d'étanchéité 12 et le dispositif électronique de commande 40 peuvent être montés en même temps dans le boîtier 20, après le montage du dispositif de connexion 7. En particulier, le dispositif électronique de commande 40 peut être monté sur l'organe d'étanchéité 12 par un bouterollage d'excroissances 124 (visibles en figures 2 et 4) de l'organe d'étanchéité 12, puis l'organe d'étanchéité 12 et le dispositif électronique de commande 40 sont montés en même temps dans le boîtier 20

En particulier, le dispositif de connexion 7 permet donc une première soudure avec chaque borne 301 de la machine 30, puis dans un deuxième temps, une seconde soudure pour se connecter avec chacune des bornes 22 du dispositif électronique de commande 40.

Lorsque l'ensemble 6 est monté sur la paroi de séparation 203, la direction longitudinale XX' du dispositif de connexion 7 correspond à l'axe de rotation de la machine 30. La première distance prédéterminée D1 permet de positionner les premières bornes 9 de manière à pouvoir être soudées avec les bornes 301 de la machine 30. La deuxième distance prédéterminée D2 permet de positionner les secondes bornes 10 en périphérie du dispositif électronique de commande 40, monté ultérieurement, pour être soudées aux bornes 22 du dispositif électronique de commande 40.

L'organe d'étanchéité 12 et la portion 181 du dispositif de connexion 7 qui se rapporte de manière étanche sur le logement 201 de la machine électrique 30 permettent d'assurer une étanchéité entre le premier 201 et le deuxième 202 logements. Ainsi, les ouvertures 205, par lesquelles les bornes 301 de la machine 30 traversent la paroi 203, peuvent se passer de joint d'étanchéité. Le passage des bornes 301 de la machine 30 à travers la paroi de séparation 203 peut se faire de manière non étanche. Après montage de l'ensemble 6, les premier 201 et deuxième 202 logements sont étanches entre eux. La paroi de séparation 203 assure une étanchéité entre les deux logements 201, 202.

En particulier, après le montage de l'ensemble 6, le capteur de position 50 est positionné en vis-à-vis radialement par rapport à l'arbre de rotation 303 de la machine 30 afin de mesurer une position. En positionnant le capteur de position 50 de sorte à venir en vis-à-vis radialement par rapport à l'arbre de rotation de la machine, on simplifie la mesure de position de la machine 30 par rapport à une position où le capteur serait dans le prolongement de l'axe de rotation de la machine 30.

Le dispositif électronique de commande 40 comprend par exemple une carte électronique de puissance, qui comprend notamment un substrat métallisé isolé (SMI), comme illustré en figure 8. Les bornes du dispositif électronique de commande 40 sont par exemple des composants 22 montés en surface (CMS) sur la carte électronique. Cependant, le dispositif électronique de commande 40 pourrait être fait autrement. Par exemple, il pourrait comprendre des modules de puissance posés sur un support.

Les bornes 22 occupent une place réduite dans le dispositif électronique de commande 40. L'espace libéré au centre du dispositif électronique de commande 40, du fait que les bornes 22 sont déportées en périphérie, permet le placement d'un interconnecteur de signal 23 et d'une sortie 501 du capteur de position 50.

La paroi de séparation 203 peut comprendre des logements tels que des logements 206 qui reçoivent des composants 41 du dispositif électronique de commande 40, par exemple des condensateurs. Ces logements sont fermés du côté du premier logement 201, ou munis d'une ouverture étanche, afin de respecter l'étanchéité entre le premier logement 201 et le deuxième logement 202.

L'équipement électrique 26 réalisé de la sorte est accouplé à une partie turbine 24 pour constituer un compresseur de suralimentation électrique 25 compact dont le dispositif électronique de commande 40 intégré est d'un montage facile et à l'abri des particules polluantes.

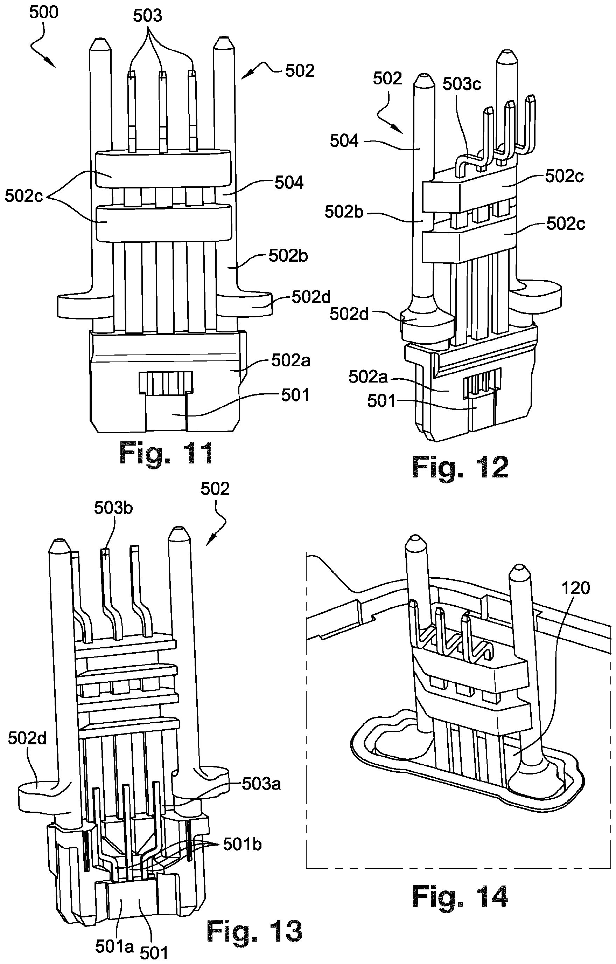

Les figures 11 à 15 illustrent un exemple de dispositif de détection 500 comprenant un capteur de position 501 utilisable dans l'ensemble 6 décrit précédemment. Le capteur de position 501 est monté sur un support 502. Ce support 502 est de préférence en un matériau électriquement isolant, par exemple du plastique. Ce support 502 est reçu dans le logement 120 de l'organe d'étanchéité 12 comme illustré en figure 14. Le logement 120 forme un trou non traversant à l'intérieur du boitier 20. Le support 502 du dispositif de détection 500 vient contre les parois du logement 120, ce qui contribue au maintien en place du dispositif de détection 500, et donc du capteur de position 501, dans le boîtier 20.

Le dispositif de détection 500 pourrait être utilisé dans un autre trou positionné à l'intérieur du boîtier 20, par exemple un trou formé dans une paroi appartenant au boitier 20, du moment que ce trou est non traversant et que le maintien du dispositif de détection 500, et notamment du capteur de position 501, est obtenu au moins en partie par la réception du support 502 contre les parois du trou, notamment ses parois latérales et sa paroi du fond.

Grâce à ce support 502, le capteur de position 501 est facilement manipulable pour être monté dans l'équipement électrique 26, notamment dans l'organe d'étanchéité 12.

En particulier, une première portion 502a du support 502 du dispositif de détection 500 reçoit le capteur de position 501. Cette portion 502a est située à une première extrémité du support 502. Lorsque le dispositif de détection 500 est monté dans le logement 120 et dans l'équipement électrique 26, le positionnement du capteur de position 501 à cette première extrémité permet une détection de la position de la machine électrique 30 par le capteur de position 501. Une deuxième portion 502b du support 502 du dispositif de détection 500 s'étend depuis la première portion 502a vers une deuxième extrémité du support 502, formant en particulier une portion intermédiaire du dispositif de détection 500. En étant reçues contre les parois du logement 120, ces première 502a et deuxième 502b portions permettent de maintenir en place, au moins en partie, le dispositif de détection 500, en particulier le capteur de position 501.

Notamment, au moins un élément de connexion électrique 503 permet de connecter électriquement le capteur de position 501 avec le dispositif électronique de commande 40. Dans l'exemple illustré sur les figures, le dispositif de détection 500 comprend trois éléments de connexion électrique 503. Les éléments de connexion électrique 503 ont des premières extrémités 503a qui se connectent à des électrodes 501b respectives du capteur de position 501 ; et des deuxièmes extrémités 503b qui se connectent au dispositif électronique de commande 40. Le dispositif 500 pourrait comprendre plus ou moins d'éléments de connexion électrique 503 en fonction du nombre d'électrodes du capteur de position 501. Les connexions des éléments 503 se font par exemple par soudage.

En particulier, les éléments de connexion électrique 503 sont solidaires avec le support 502. Les éléments de connexion électrique 503 sont portés par le support 502 pour réaliser la connexion électrique du capteur de position 501. Ainsi, le support 502 permet à la fois le montage du capteur de position 501 dans le boîtier 20, notamment dans l'organe d'étanchéité 12, et le maintien des éléments de connexion électriques 503 entre le capteur de position 501 et le dispositif électronique de commande 40.

Notamment, les éléments de connexion électrique sont sous forme de languettes 503 qui s'étendent depuis la première portion 502a du support 502, le long de la deuxième portion 502b, jusqu'à la deuxième extrémité du support 502. Les deuxièmes extrémités 503b des éléments de connexion électrique 503 situées au niveau de la deuxième extrémité du support 502 peuvent être rapportées contre des bornes électriques respectives du dispositif électronique de commande 40, notamment pour alimenter le capteur de position 501 et/ou acheminer un signal de position de la machine électrique 30 depuis le capteur de position 501 vers le dispositif électronique de commande 40. Les éléments de connexion électrique 503 sont en particulier sensiblement rectilignes le long de la deuxième portion 502b du support 502 et présentent chacun un décrochement 503c au niveau de la deuxième extrémité du support 502. Ce décrochement 503c permet de se rapprocher des bornes électriques du dispositif électronique de commande 40 lorsque celles-ci ne sont pas dans le prolongement du dispositif de détection 500.

Notamment, la deuxième portion 502b du support 502 comprend deux tiges 504 qui s'étendent depuis la première portion 502a du support 502 jusqu'à la deuxième extrémité du support 502. Les deux tiges 504 peuvent s'étendre depuis les bords de la première portion 502a du support 502. En particulier, les éléments de connexion électrique 503 sont maintenus solidaires avec le support 502 grâce à des troisièmes portions 502c. Ces troisièmes portions 502c s'étendent transversalement depuis les tiges 504 et viennent en prise avec les éléments de connexion électrique 503. Les troisièmes portions 503c peuvent donc relier les deux tiges 504 entre elles. Des zones libres de matière peuvent séparer les troisièmes portions 502c entre elles. Le dispositif de détection 500 peut comprendre deux troisièmes portions 502 c comme illustré sur les figures, ou une, ou plus de deux. Cependant, le support 502 pourrait comprendre une seule tige 504, par exemple s'étendant depuis une zone centrale de la première portion 502a du support 502 ; avec une ou plusieurs troisièmes portions 502c qui maintiennent les éléments de connexion électrique 503. Notamment, les éléments de connexion électrique 503 sont en outre en prise avec la première portion 502a du support 502.

Notamment, le support 502 comprend deux excroissances 502d qui s'étendent chacune depuis la deuxième portion 502b. En particulier, chaque excroissance 502d s'étend depuis une tige 504. Les excroissances 502d viennent en appui sur un palier 120a, visible en figure 4, formé par une paroi latérale du logement 120. Ces excroissances 502d en venant en appui contre les paliers 120a contribuent à un maintien efficace du dispositif de détection 500 dans le logement 120.

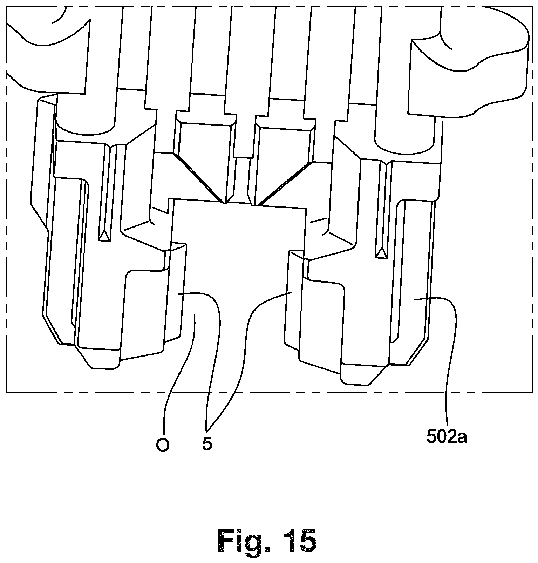

En particulier, le capteur de position 501 comprend un corps 501a et des électrodes 501b qui s'étendent depuis un côté du corps 501a. Par exemple, le corps 501a est sensiblement parallélépipédique. Notamment, comme illustré en figure 15, la première portion 502a du support 502 comporte une surface S sur laquelle un bord du corps 501a du capteur 501 vient en appui. La première portion 502a comprend en outre une ouverture O qui laisse découverte une partie centrale du corps 501a du capteur 501 lorsque le capteur 501 est monté sur la première portion 502a du support 502. Ainsi, on limite les épaisseurs de paroi entre l'arbre de rotation 303 et le capteur de position 501, lorsque le dispositif de détection 500 est monté dans l'équipement électrique 26, ce qui améliore la qualité de la détection réalisée par le capteur de position 501.

Notamment, lorsque le dispositif de détection 500 est monté dans l'organe d'étanchéité 12, puis dans le boîtier 20, le dispositif électronique de commande 40 vient en appui contre le support 502. Ainsi, le dispositif de détection 500 est maintenu d'une part du fait que le support 502 vient contre les parois du logement 120 et d'autre part du fait que le dispositif électronique de commande 40 bloque le dispositif de détection 500 dans le logement 120 en venant en appui sur le support 502 du dispositif de détection 500. La mise en appui du dispositif électronique de commande 40 contre le support 502 du dispositif de détection 500 peut être assurée par des excroissances 124 (visibles en figures 2 et 4) issues de l'organe d'étanchéité 12 qui passent dans des ouvertures correspondantes du dispositif électronique de commande 40 pour y être bouterollées. Les extrémités des tiges 504 situées au niveau de la deuxième extrémité du support 502 peuvent servir à localiser le dispositif électronique de commande 40 par rapport au dispositif de détection 500 lors de son montage, en venant dans des ouvertures correspondantes du dispositif électronique de commande 40. En particulier, le dispositif électronique de commande 40 peut comprendre une partie de puissance par laquelle circule un courant alimentant la machine électrique 30, et une partie de contrôle destinée à alimenter les composants de la partie de puissance ; les parties de puissance et de contrôle étant superposées l'une en vis-à-vis de l'autre. Dans ce cas, les extrémités des tiges 504 situées au niveau de la deuxième extrémité du support 502 peuvent traverser la partie de puissance pour se loger dans des ouvertures correspondantes de la partie de contrôle. Les éléments de connexion électrique 503 viennent alors se connecter à la partie de contrôle.

L'invention ne se limite pas au seul exemple décrit ci-dessus. Les figures représentent un exemple particulier de réalisation qui combine plusieurs modes de réalisation. Cependant, les caractéristiques liées aux modes de réalisation peuvent-être indépendantes entre elles d'un mode à l'autre, ou combinées entre elles, comme cela ressort des revendications.

L'invention a été décrite avec une pluralité de premières bornes 8 et une pluralité de secondes bornes 10 cependant, le dispositif de connexion 7 peut comprendre une seule borne 8 et une seule borne 10, notamment lorsque la machine 30 comporte une seule phase.

Dans l'exemple illustré sur les figures, le cylindre 18 du dispositif de connexion 7 a une section sensiblement en forme d'un hexagone, Cependant, une forme circulaire, ou autre, peut également être choisie.

Dans les exemples illustrés, le capteur 50, 501 est par exemple un capteur à effet hall, un capteur à élément magnéto résistif, ou autre.

## Revendications

1. Dispositif de détection de position (500) destiné à être monté dans un boitier (20) qui comprend une machine électrique (30) et un dispositif électronique de commande (40) de la machine électrique (30), pour transférer un signal de position de la machine (30) audit dispositif électronique de commande (40), le dispositif (500) comprenant :
- un capteur de position (501) qui comprend un corps (501a),
- un support (502) sur lequel le capteur de position (501) est destiné à être monté,
le support (502) étant configuré pour être reçu contre les parois d'un trou non débouchant (120) à l'intérieur dudit boitier (20) afin de réaliser, au moins en partie, le maintien en place dudit dispositif (500),
le support (502) comporte :
une première portion (502a) destinée à recevoir ledit capteur de position (501), ladite portion (502a) étant située à une première extrémité du support (502) afin de permettre une détection de la position de la machine électrique (30) par le capteur de position (501), la première portion (502a) du support (502) comporte une surface (S) sur laquelle un bord du corps (501a) du capteur est destiné à être en appui, et comporte en outre une ouverture (O) de manière à laisser découvert une partie centrale du corps (501a) du capteur de position (501) et
- une deuxième portion (502b) s'étendant depuis la dite première portion (502a) vers une deuxième extrémité du support (502),
lesdites première (502a) et deuxième (502b) portions étant configurées pour être reçues contre les parois du trou non débouchant (120) afin de maintenir en place, au moins en partie, ledit dispositif (500).

2. Dispositif (500) selon la revendication 1, comportant au moins un élément de connexion électrique (503) destiné à connecter électriquement le capteur de position (501) avec le dispositif électronique de commande (40).

3. Dispositif (500) selon la revendication 2, dans lequel l'élément de connexion électrique (503) est solidaire dudit support (502).

4. Dispositif (500) selon la revendication 2 ou 3, dans lequel l'élément de connexion électrique (503) est une languette.

5. Dispositif (500) selon la revendication 4, dans lequel la languette est sensiblement rectiligne le long de la deuxième portion (502b) et comprend un décrochement (503c) sensiblement au niveau de la deuxième extrémité.

6. Dispositif (500) selon l'une des revendications 2 à 5, dans lequel ledit élément de connexion électrique (503) s'étend depuis ladite première portion (502a) qui reçoit le capteur de position (501) jusqu'à la deuxième extrémité du support (502).

7. Dispositif (500) selon la revendication 6, dans lequel l'élément de connexion électrique (503) comprend une extrémité (503b) située au niveau de la deuxième extrémité du support (502) qui est destinée à être rapportée contre une borne électrique du dispositif électronique de commande (40).

8. Dispositif (500) selon l'une des revendications 1 à 7, dans lequel le support (502) comprend au moins une excroissance (502d) s'étendant depuis la deuxième portion (502b) et destinée à venir en appui sur un palier (120a) formé par une paroi latérale du trou non débouchant (120).

9. Dispositif (500) selon l'une des revendications 1 à 8, dans lequel la deuxième portion (502b) du support (502) comprend au moins une tige (504) s'étendant entre la première extrémité et la deuxième extrémité du support (502).

10. Dispositif (500) selon la revendication 9 et 2, dans lequel le support (502) comprend au moins une troisième portion (502c) s'étendant transversalement depuis ladite tige (504) et venant en prise avec l'élément de connexion électrique (503).

11. Dispositif (500) selon la revendication 10, dans lequel le support (502) comprend deux tiges (504) s'étendant depuis la première portion (502a) et reliées entre elles par la au moins une troisième portion (502c).

12. Equipement électrique (26) comprenant :
- une machine électrique (30),
- un dispositif électronique de commande (40) destiné à commander la machine électrique (30),
- un boitier (20) logeant la machine électrique (30) dans un premier logement (201), et le dispositif électronique de commande (40) dans un deuxième logement (202), les deux logements (201, 202) étant étanches l'un par rapport à l'autre,
- un dispositif (500) selon l'une des revendications précédentes, destiné à mesurer une position de la machine électrique (30) et logé dans un organe d'étanchéité (12) contribuant à l'étanchéité entre le premier logement (201) et le deuxième logement (202).

13. Equipement (26) selon la revendication 12, dans lequel ledit organe d'étanchéité (12) comprend un logement (120) comportant ledit dispositif (500), ledit logement (120) étant configuré de sorte que le capteur de position (501) du dispositif (500) est positionné vis-à-vis d'un arbre de rotation (303) de la machine électrique (30) de manière à détecter un signal émis par un élément correspondant porté par l'arbre de rotation (303).

14. Equipement (26) selon la revendication 12 ou 13, dans lequel le dispositif (500) est maintenu en place par son support (502) étant reçu contre les parois du logement (120) et par une mise en appui du dispositif électronique de commande (40) sur le support (502) du dispositif (500).

## Patentansprüche

1. Vorrichtung zur Positionserkennung (500), welche dazu bestimmt ist, in ein Gehäuse (20) eingebaut zu werden, welches eine elektrische Maschine (30) und eine elektronische Steuervorrichtung (40) für die elektrische Maschine (30) umfasst, zum Übertragen eines Positionssignals der Maschine (30) an die elektronische Steuervorrichtung (40), wobei die Vorrichtung (500) umfasst:
- einen Positionssensor (501), welcher einen Körper (501a) umfasst,
- einen Halter (502), an welchem der Positionssensor (501) anzubringen ist,
wobei der Halter (502) dafür ausgelegt ist, an den Wänden eines nicht durchgehenden Loches (120) im Inneren des Gehäuses (20) anliegend aufgenommen zu werden, um wenigstens teilweise die Fixierung der Vorrichtung (500) zu bewirken,
wobei der Halter (502) aufweist:
- einen ersten Abschnitt (502a), der dazu bestimmt ist, den Positionssensor (501) aufzunehmen, wobei sich der Abschnitt (502a) an einem ersten Ende des Halters (502) befindet, um eine Erkennung der Position der elektrischen Maschine (30) durch den Positionssensor (501) zu ermöglichen, wobei der erste Abschnitt (502a) des Halters (502) eine Fläche (S) aufweist, an welcher ein Rand des Körpers (501a) des Sensors anzuliegen bestimmt ist, und außerdem eine Öffnung (O) aufweist, um einen mittleren Teil des Körpers (501a) des Positionssensors (501) freiliegen zu lassen, und
- einen zweiten Abschnitt (502b), der sich von dem ersten Abschnitt (502a) aus zu einem zweiten Ende des Halters (502) hin erstreckt,
wobei der erste (502a) und zweite (502b) Abschnitt dafür ausgelegt sind, an den Wänden des nicht durchgehenden Loches (120) anliegend aufgenommen zu werden, um die Vorrichtung (500) wenigstens teilweise zu fixieren.

2. Vorrichtung (500) nach Anspruch 1, welche wenigstens ein elektrisches Verbindungselement (503) aufweist, das dazu bestimmt ist, den Positionssensor (501) mit der elektronischen Steuervorrichtung (40) elektrisch zu verbinden.

3. Vorrichtung (500) nach Anspruch 2, wobei das elektrische Verbindungselement (503) mit dem Halter (502) fest verbunden ist.

4. Vorrichtung (500) nach Anspruch 2 oder 3, wobei das elektrische Verbindungselement (503) ein Flachstecker ist.

5. Vorrichtung (500) nach Anspruch 4, wobei der Flachstecker entlang des zweiten Abschnitts (502b) im Wesentlichen gerade ist und einen Absatz (503c) im Wesentlichen am zweiten Ende umfasst.

6. Vorrichtung (500) nach einem der Ansprüche 2 bis 5, wobei sich das elektrische Verbindungselement (503) vom ersten Abschnitt (502a), welcher den Positionssensor (501) aufnimmt, bis zum zweiten Ende des Halters (502) erstreckt.

7. Vorrichtung (500) nach Anspruch 6, wobei das elektrische Verbindungselement (503) ein am zweiten Ende des Halters (502) befindliches Ende (503b) umfasst, welches dazu bestimmt ist, an eine elektrische Anschlussklemme der elektronischen Steuervorrichtung (40) angelegt zu werden.

8. Vorrichtung (500) nach einem der Ansprüche 1 bis 7, wobei der Halter (502) wenigstens einen Ansatz (502d) umfasst, der sich von dem zweiten Abschnitt (502b) aus erstreckt und dazu bestimmt ist, an einem Lager (120a) zur Anlage zu kommen, das von einer Seitenwand des nicht durchgehenden Loches (120) gebildet wird.

9. Vorrichtung (500) nach einem der Ansprüche 1 bis 8, wobei der zweite Abschnitt (502b) des Halters (502) wenigstens einen Stab (504) umfasst, der sich zwischen dem ersten Ende und dem zweiten Ende des Halters (502) erstreckt.

10. Vorrichtung (500) nach Anspruch 9 und 2, wobei der Halter (502) wenigstens einen dritten Abschnitt (502c) umfasst, der sich von dem Stab (504) aus in Querrichtung erstreckt und mit dem elektrischen Verbindungselement (503) in Eingriff gelangt.

11. Vorrichtung (500) nach Anspruch 10, wobei der Halter (502) zwei Stäbe (504) umfasst, die sich von dem ersten Abschnitt (502a) aus erstrecken und durch wenigstens einen dritten Abschnitt (502c) miteinander verbunden sind.

12. Elektrische Einrichtung (26), welche umfasst:
- eine elektrische Maschine (30),
- eine elektronische Steuervorrichtung (40), die dazu bestimmt ist, die elektrische Maschine (30) zu steuern,
- ein Gehäuse (20), das die elektrische Maschine (30) in einem ersten Aufnahmeraum (201) und die elektronische Steuervorrichtung (40) in einem zweiten Aufnahmeraum (202) aufnimmt, wobei die zwei Aufnahmeräume (201, 202) zueinander abgedichtet sind,
- eine Vorrichtung (500) nach einem der vorhergehenden Ansprüche, die dazu bestimmt ist, eine Position der elektrischen Maschine (30) zu messen, und in einem Dichtungsorgan (12) aufgenommen ist, das zur Dichtigkeit zwischen dem ersten Aufnahmeraum (201) und dem zweiten Aufnahmeraum (202) beiträgt.

13. Einrichtung (26) nach Anspruch 12, wobei das Dichtungsorgan (12) einen Aufnahmeraum (120) umfasst, der die Vorrichtung (500) enthält, wobei der Aufnahmeraum (120) so gestaltet ist, dass der Positionssensor (501) der Vorrichtung (500) gegenüber einer Drehwelle (303) der elektrischen Maschine (30) positioniert ist, um so ein Signal zu erkennen, das von einem von der Drehwelle (303) getragenen entsprechenden Element gesendet wird.

14. Einrichtung (26) nach Anspruch 12 oder 13, wobei die Vorrichtung (500) durch ihren Halter (502), der an den Wänden des Aufnahmeraumes (120) anliegend aufgenommen ist, und durch ein Anlegen der elektronischen Steuervorrichtung (40) an den Halter (502) der Vorrichtung (500) fixiert wird.

## Claims

1. Position detection device (500) intended to be mounted in a housing (20) which includes an electrical machine (30) and a control electronic device (40) of the electrical machine (30), for transferring a position signal from the machine (30) to said control electronic device (40), the device (500) comprising:
- a position sensor (501) which comprises a body (501a),
- a support (502) on which the position sensor (501) is intended to be mounted,
the support (502) being configured to be received against the walls of a blind hole (120) inside of said housing (20) in order to produce, at least partly, the securing in place of said device (500),
the support (502) comprises:
a first portion (502a) intended to receive said position sensor (501), said portion (502a) being situated at a first end of the support (502) in order to allow a detection of the position of the electrical machine (30) by the position sensor (501), the first portion (502a) of the support (502) comprises a surface (S) on which an edge of the body (501a) of the sensor is intended to bear, and further comprises an aperture (O) so as to leave uncovered a central part of the body (501a) of the position sensor (501) and
- a second portion (502b) extending from said first portion (502a) to a second end of the support (502),
said first (502a) and second (502b) portions being configured to be received against the walls of the blind hole (120) in order to, at least partly, secure said device (500) in place.

2. Device (500) according to Claim 1, comprising at least one electrical connection element (503) intended to electrically connect the position sensor (501) with the control electronic device (40).

3. Device (500) according to Claim 2, wherein the electrical connection element (503) is integral to said support (502).

4. Device (500) according to Claim 2 or 3, wherein the electrical connection element (503) is a tongue.

5. Device (500) according to Claim 4, wherein the tongue is substantially rectilinear along the second portion (502b) and comprises a setback (503c) substantially at the second end.

6. Device (500) according to one of Claims 2 to 5, wherein said electrical connection element (503) extends from said first portion (502a) which receives the position sensor (501) to the second end of the support (502) .

7. Device (500) according to Claim 6, wherein the electrical connection element (503) comprises an end (503b) situated at the second end of the support (502) which is intended to be applied against an electrical terminal of the control electronic device (40).

8. Device (500) according to one of Claims 1 to 7, wherein the support (502) comprises at least one protuberance (502d) extending from the second portion (502b) and intended to come to bear on a step (120a) formed by a lateral wall of the blind hole (120).

9. Device (500) according to one of Claims 1 to 8, wherein the second portion (502b) of the support (502) comprises at least one rod (504) extending between the first end and the second end of the support (502).

10. Device (500) according to Claims 9 and 2, wherein the support (502) comprises at least one third portion (502c) extending transversely from said rod (504) and engaging with the electrical connection element (503).

11. Device (500) according to Claim 10, wherein the support (502) comprises two rods (504) extending from the first portion (502a) and linked to one another by the at least one third portion (502c).

12. Electrical equipment (26) comprising:
- an electrical machine (30),
- a control electronic device (40) intended to control the electrical machine (30),
- a housing (20) housing the electrical machine (30) in a first housing (201), and the control electronic device (40) in a second housing (202), the two housings (201, 202) being seal-tight with respect to one another,
- a device (500) according to one of the preceding claims, intended to measure a position of the electrical machine (30) and housed in a sealing member (12) contributing to the seal between the first housing (201) and the second housing (202).

13. Equipment (26) according to Claim 12, wherein said sealing member (12) comprises a housing (120) comprising said device (500), said housing (120) being configured in such a way that the position sensor (501) of the device (500) is positioned facing a rotation shaft (303) of the electrical machine (30) so as to detect a signal emitted by a corresponding element borne by the rotation shaft (303) .

14. Equipment (26) according to Claim 12 or 13, wherein the device (500) is held in place by its support (502) being received against the walls of the housing (120) and by the control electronic device (40) bearing on the support (502) of the device (500).
